# EUROPÄISCHE PATENTSCHRIFT

(11) **EP 0 546 002 B1**
(45) Veröffentlichungstag und Bekanntmachung des Hinweises auf die Patenterteilung: **27.03.1996**
(21) Anmeldenummer: 91915292.6
(22) Anmeldetag: 30.08.1991
(51) Int. Cl.: H01L 27/146, H04N 3/15, G01B 11/00

(54) **KAMERACHIP FÜR EINE PUNKTFÖRMIGE EREIGNISSE ERFASSENDE UND AUSWERTENDE KAMERA**
CAMERA CHIP FOR A CAMERA DETECTING AND EVALUATING POINT PHENOMENA
PUCE POUR UNE CAMERA DE DETECTION ET D'EVALUATION D'EVENEMENTS PONCTUELS

(30) Priorität: 01.09.1990 DE 4027732
(43) Veröffentlichungstag der Anmeldung: 16.06.1993
(73) Patentinhaber: Thiedig, Ullrich, Dipl.-Ing., D-38118 Braunschweig (DE); Wente, Holger, Dipl.-Ing., D-38108 Braunschweig (DE); KÖSTER, Bernd, Dr., D-38102 Braunschweig (DE)
(72) Erfinder: Thiedig, Ullrich, Dipl.-Ing., D-38118 Braunschweig (DE); Wente, Holger, Dipl.-Ing., D-38108 Braunschweig (DE); KÖSTER, Bernd, Dr., D-38102 Braunschweig (DE)
(74) Vertreter: Lins, Edgar, Dipl.-Phys. Dr.jur.
(86) Internationale Anmeldenummer: DE9100696
(87) Internationale Veröffentlichungsnummer: WO9204733

(56) Entgegenhaltungen:
- EP-A- 0 157 141
- EP-A- 0 168 557
- EP-A- 0 330 100
- WO-A-89/01129
- DE-A- 3 039 451
- DE-A- 3 905 591
- DE-B- 2 065 927
- FR-A- 2 507 042
- US-A- 3 813 487
- US-A- 4 527 891

## Beschreibung

Die Erfindung betrifft eine Schaltungsanordnung für eine punktförmige Ereignisse in einer Ebene erfassende und auswertende Kamera mit lichtempfindlichen Bauelementen, deren Ausgangssignale zeilenweise auf entsprechende parallele Eingänge eines Extremwertdetektors schaltbar sind, wobei der Extremwertdetektor jeweils an einem der Eingänge angeschlossene Vergleicher aufweist, von denen jeder das zugehörige Eingangssignal mit einem Referenzsignal vergleicht, das aus den zusammengeschalteten Ausgangssignalen aller lichtempfindlichen Bauelemente der betroffenen Zeile gebildet ist und ein Ausgangssignal abgibt, wenn das zugehörige Eingangssignal größer oder gleich dem Referenzsignal ist, und wobei parallele Eingänge eines Dekoders jeweils mit einem Ausgang des Vergleichers verbunden sind zur Feststellung eines die Position des Extremwerts charakterisierenden Ausgangssignals an einem Eingang des Dekoders.

Weiterhin betrifft die Erfindung eine Schaltungsanordnung gemäß dem Oberbegriff des Anspruchs 8.

Durch die EP 0 330 100 A 2 ist eine optische Lagebestimmung von punktförmigen Objekten mit einer Halbleiterkamera grundsätzlich bekannt. Dabei werden die flächig angeordneten lichtempfindlichen Elemente der Halbleiterkamera sequentiell abgefragt und ein Extremwert detektiert. Die zu dem Extremwert gehörenden Zeilen- und Spaltenkoordinatenwerte werden abgespeichert, wobei durch die Hardware-Extremwertdetektion eine Echtzeitauswertung möglich ist. Für die Auswertung der in üblicher Weise durch ein Schieberegister hindurchgeschobenen, jeweils zu einer Zeile gehörenden Spaltenwerte ist ein paralleler Extremwertdetektor vorgesehen, in dem die zu einer Zeile gehörenden Signalwerte aller Spalten auf je einen Vergleicher gelangen, deren Ausgangssignale zusammengeschaltet sind und so einen Referenzwert für die Vergleicher bilden. In dieser Schaltung kann nur der Vergleicher, an dessen Eingang das maximale Signal ansteht, ein positives Ausgangssignal erzeugen, da bei den anderen, als Operationsverstärker ausgebildeten Vergleichern der am invertierenden Eingang anliegende Referenzwert höher ist als der am nicht invertierenden Eingang anliegende Eingangs-Signalwert. Gemäß Figur 3a dieser Druckschrift kann eine entsprechende Extremwertdetektion auch parallel für die Spalten durchgeführt werden. Aber auch in diesem Fall müssen die parallelen Spaltenwerte zeilenweise durch Schieberegister hindurchgeschoben werden, so daß eine vollständige Auswertung des Bildes der Halbleiterkamera erst in einer nach der Anzahl der Zeilen bzw. Spalten entsprechenden Anzahl von Schritten erfolgen kann.

Diese Auswertungsanordnung ist sehr vorteilhaft, weil sie eine schnelle Extremwertdetektion ermöglicht. Nachteilig ist, daß für die Auswertung eines Bildes die der Anzahl der lichtempfindlichen Elemente in den Spalten entsprechende Anzahl von Signalwerten durch das Schieberegister durchgeschoben werden muß.

Es ist aus einem Prospekt "Optotrak" der Northern Digital Inc., Kanada, grundsätzlich bekannt, punktförmige Ereignisse mit einer Kamera zu verfolgen, die aus zwei räumlich voneinander getrennten Zeilenbildsensoren mit vorgeschalteten Linsen, die offensichtlich Zylinderlinsen sind, zu verfolgen. Die Auswertung erfolgt mit Prozessoren, die als Transputer realisiert sind. Die maximale Abtastrate ist mit 5000 Hz angegeben. Das System eignet sich daher nicht für die Erfassung und Auswertung hochfrequenter Vorgänge. Für die Überwachung hochfrequenter Vorgänge bis hinein in den MHz-Bereich stehen bisher keine optischen Meßanordnungen zur Verfügung, die eine Echtzeitauswertung gestatten.

Ausgehend von dieser Problemstellung ist eine Schaltungsanordnung der eingangs erwähnten Art erfindungsgemäß dadurch gekennzeichnet, daß die lichtempfindlichen Bauelemente in Form einer einzelnen Zeile angeordnet und mit dem zugehörigen Extremwertdetektor und dem zugehörigen Dekoder auf einem gemeinsamen Chip angeordnet sind und daß wenigstens zwei solcher Zeilen von lichtempfindlichen Bauelementen zueinander gedreht angeordnet sind.

Mit der vorliegenden Erfindung wird somit ein spezieller einstückiger Kamerachip angegeben, auf dem die lichtempfindlichen Elemente ausschließlich in Form einer Zeile - und nicht als Matrix - angeordnet sind. Der für die Feststellung des Extremwertes erforderliche Extremwertdetektor sowie der Dekoder für die Feststellung der Koordinate des Extremwertes ist auf demselben Kamerachip angeordnet. Alle lichtempfindlichen Elemente lassen sich somit sofort auswerten, ohne daß ein Durchschieben der Ausgangswerte der lichtempfindlichen Elemente über die Anzahl der Spalten oder Zeilen erfolgen müßte. Die für die parallele Auswertung erforderlichen zahlreichen Verbindungen lassen sich auf dem Chip auf kürzestem Wege unproblematisch realisieren. Da mit jeder Taktfrequenz ein Extremwert feststellbar ist, lassen sich extrem hohe Abtastfrequenzen (beispielsweise 10 MHz) für die Feststellung von Extremwerten verwenden. Dadurch sind Schwingungen von beispielsweise 1 MHz noch gut auflösbar, so daß Schwingungen bis hinein in den höchsten Ultraschallbereich detektiert und ausgewertet werden können. Da die erfindungsgemäß verwendete Extremwertdetektion auch quasi kontinuierlich arbeiten kann, sobald und solange die nötige Belichtung vorhanden ist, lassen sich auch noch höhere Geschwindigkeiten realisieren.

In einer besonders bevorzugten Ausführungsform der Erfindung sind auf dem Kamerachip zwei zueinander gedreht stehende Zeilen von lichtempfindlichen Bauelementen vorgesehen, die über die ihnen zugeordneten Extremwertdetektoren mit einer zentralen, die Dekoder enthaltenden Auswertungsschaltung verbunden sind. Erstmalig werden damit auf einem Kamerachip zwei Zeilenbildsensoren realisiert, denen unmittelbar eine zugehörige Hardware-Extremwertdetektionsschaltung angeschlossen ist. Mit dieser Anordnung steht eine zweidimensionale Kamera zur Verfügung, die für die Verfolgung punktförmiger Ereignisse mit einer Echtzeit-Auswertung auch bei höchsten Meßfrequenzen geeignet ist.

Der erfindungsgemäße Kamerachip läßt sich sogar für stereoskopische Aufnahmen ausbilden, indem eine Anordnung von vier Zeilen von lichtempfindlichen Bauelementen vorgesehen ist, von denen jeweils zwei parallel zueinander angeordnet sind und die zueinander parallelen Zeilen zu den anderen zueinander parallelen Zeilen gedreht angeordnet sind. Selbstverständlich ist es in alle Fällen zweckmäßig, die Zeilen um 90° zueinander gedreht vorzusehen, so daß sie orthogonal zueinander stehen.

Besonders bevorzugt ist dabei die Anordnung, in der die Zeilen der lichtempfindlichen Bauelemente an Rändern eines rechteckigen Chips angeordnet sind, wobei sich die Extremwertdetektoren unmittelbar nach innen anschließen und eine Auswertungsschaltung mit den Detektoren für alle Zeilen mittig auf dem Chip angeordnet ist. Im Unterschied zu bisherigen Techniken wird bei der erfindungsgemäßen Anordnung der Analogwert des Extremwertes nicht mehr benötigt. Er kann aber dennoch aus dem Chip als Meßwert herausgeführt werden, um beispielsweise eine Belichtungskontrolle o. ä. durchzuführen.

Der erfindungsgemäße Chip läßt sich auch als Farbsensor ausbilden und eignet sich dann zur gleichzeitigen Auswertung von farblich unterschiedlichen Punkten. Die lichtempfindlichen Bauelemente für eine Zeile sind dann für mehrere Farben empfindlich und mit jeweils einem Vergleicher verbunden, wobei die jeweils zu einer Farbe gehörenden Ausgangssignale der lichtempfindlichen Bauelemente zur Bildung eines zur jeweiligen Farbe gehörenden Referenzsignals zusammengefaßt sind.

Gemäß einem im Anspruch 8 angegebenen Aspekt der Erfindung sind zur sequentiellen Erkennung gleichzeitig aufgenommener Punkte unterschiedlicher Farbe vor die lichtempfindlichen Elemente zeilenweise unterschiedliche Farbfilter vorgeschaltet, wobei dann für unterschiedliche Farben automatisch unterschiedliche Referenzwerte entstehen.

Die Erfindung soll im folgenden anhand von in der Zeichnung dargestellten Ausführungsbeispielen näher erläutert werden. Es zeigen:
- Figur 1:: eine schematische Darstellung einer Schaltungsanordnung für lichtempfindliche Zellen einer Zeile mit einem parallelen Extremwertdetektor und einem Dekoder, wie sie auf einem Chip realisierbar sind;
- Figur 2:: eine schematische Darstellung der Anordnung gemäß Figur 1 auf einem Chip;
- Figur 3:: eine schematische Darstellung einer Anordnung mit zwei orthogonal zueinander stehenden Zeilen von lichtempfindlichen Bauelementen mit ihrer Beschaltung auf einem Chip;
- Figur 4:: eine schematische Darstellung des prinzipiellen Kameraaufbaus mit einem Chip gemäß Figur 3;
- Figur 5:: eine prinzipielle Anordnung von 4 Zeilen mit lichtempfindlichen Bauelementen auf einem Chip;
- Figur 6:: eine schematische Darstellung der Beschaltung der lichtempfindlichen Bauelemente einer Zeile mit Farbsensoren;
- Figur 7:: eine schematische Darstellung für mit Farbfiltern versehenen lichtempfindlichen Bauelementen zur sequentiellen Abtastung für gleichzeitig aufgenommener verschiedenfarbiger Leuchtpunkte mit der Beschaltung gemäß Figur 1.

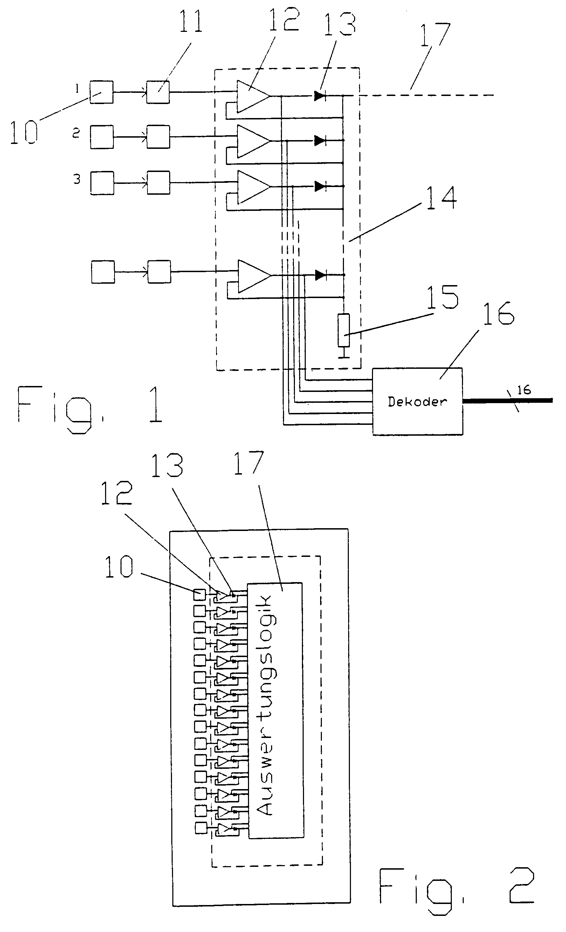

Figur 1 zeigt schematisch lichtempfindliche Zellen 10 einer Zeile wobei in dem dargestellten Ausführungsbeispiel 4096 lichtempfindliche Zellen 10 vorgesehen sind. Zu jeder lichtempfindlichen Zelle 10 gehört ein Speicher 11, der den während einer Abtastperiode entstandenen Meßwert speichert. Der abgespeicherte Meßwert gelangt auf den nicht invertierenden Eingang eines als Vergleicher 12 dienenden Operationsverstärkers, dessen Ausgangssignal über eine in Flußrichtung gekoppelte Diode 13 auf eine Gemeinschaftsleitung 14 gelangt, von der aus Anschlüsse mit den invertierenden Eingängen der 4096 Vergleicher 12 hergestellt sind. Die Gemeinschaftsleitung 14 ist mit einem Fußpunktwiderstand 15 an Masse gelegt.

Die parallel liegenden Ausgänge der 4096 Vergleicher 12 sind parallel mit 4096 Eingängen eines Dekoders 16 verbunden. Eine Ausgangsleitung 17 erlaubt die Abnahme des festgestellten analogen Spitzenwertes.

Die dargestellte Schaltung erlaubt in Echtzeit die sofortige Ermittlung der Lage eines Extremwerts, hier eines Maximalwerts an einem bestimmten lichtempfindlichen Element 10 innerhalb der Zeile.

Solange auf der Gemeinschaftsleitung 14 zu Beginn der Abtastung noch kein Signal anliegt, werden alle von den lichtempfindlichen Elementen 10 gemessenen Signale über die Vergleicher 12 auf die Gemeinschaftsleitung 14 geleitet. Dabei baut sich auf der Gemeinschaftsleitung 14 ein Signalwert auf, der dem maximal gemessenen Signalwert entspricht. Da dieser maximal gemessene Signalwert als Referenzsignal auf die invertierenden Eingänge aller Vergleicher 12 zurückgekoppelt wird, kann nur noch ein Vergleicher 12 ein Signal durchlassen, nämlich derjenige Vergleicher 12, an dessen nicht invertierenden Eingang der maximale Signalwert ansteht. Demzufolge steht nur auf einer Eingangsleitung des Dekoders 16 ein "High"-Signal an, während alle anderen Ausgänge der Vergleicher 12 "low" sind. Entsprechend der mit "High"-Signal versehenen Eingangsleitung des Dekoders 16 erzeugt dieser an seinem Ausgang ein binäres Datensignal, das die Lage der entsprechenden Eingangsleitung - und somit die Lage des den Maximalwert detektierenden lichtempfindlichen Elements 10 - charakterisiert und kann sofort abgespeichert werden.

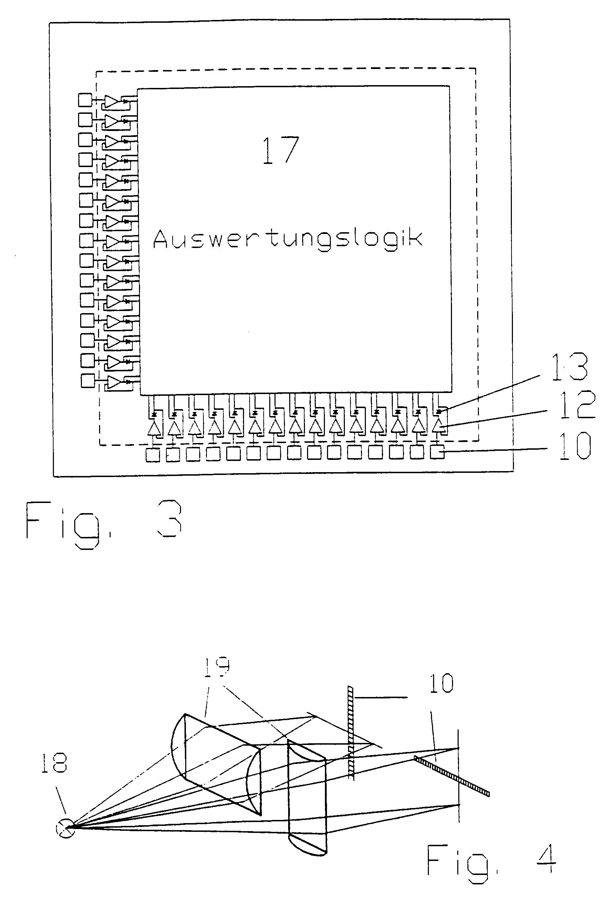

Figur 2 zeigt eine schematische Anordnung der lichtempfindlichen Elemente 10, der Vergleicher 12 und Dioden 13 sowie eine gemeinsame Auswertungslogik 17, die den Dekoder 16 umfaßt, auf einem Chip. Die Integration dieser Elemente macht auch bei einer Anzahl von 4096 lichtempfindlichen Elementen 10 pro Zeile und den damit verbundenen 4096 Vergleichern 12 und Dioden 13 mit ihren entsprechenden Ausgangsleitungen keine Probleme.

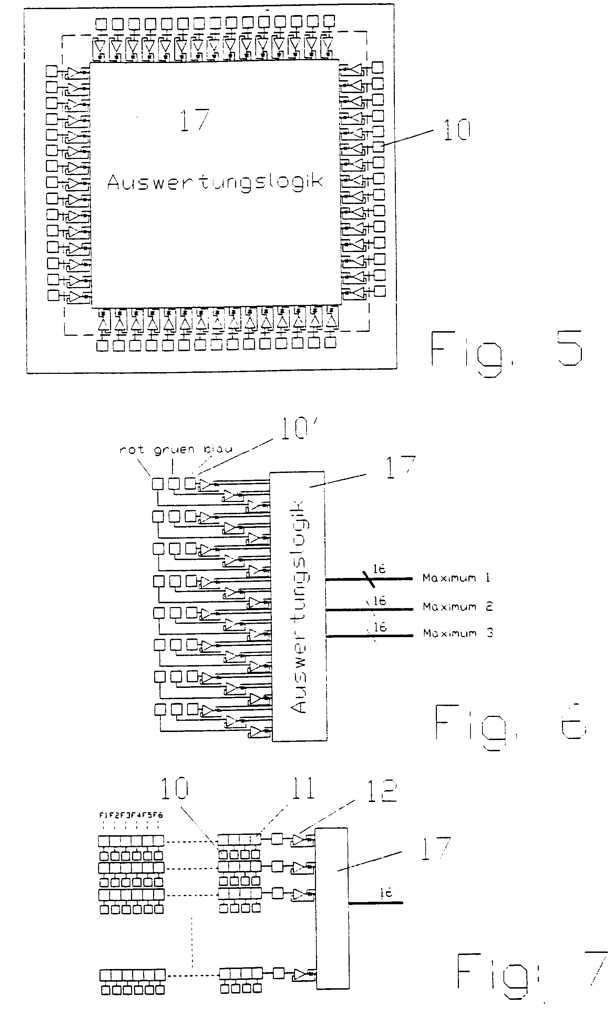

Figur 3 zeigt eine erweiterte Anordnung, die mit Ausnahme der Aufnahmeoptik eine vollständige Quasi-Array-Kamera beinhaltet. Dabei sind die lichtempfindlichen Elemente 10 in zwei orthogonal zueinander stehenden Zeilen am Rande des Chips angeordnet. Die Vergleicher 12 und Dioden 13 schließen sich nach innen hin an und münden in die zentrale Auswertungslogik 17.

Figur 4 verdeutlicht schematisch, daß mit einer solchen Anordnung mit zwei orthogonalen Zeilen die Lage eines Leuchtpunktes 18 eindeutig durch die lichtempfindlichen Elemente 10 der beiden Zeilen bestimmbar ist, wenn vor die Zeilensensoren orthogonal zueinanderstehende Zylinderlinsen 19 angeordnet sind, deren Zylinderachse orthogonal zu der Erstreckung des zugehörigen Zeilensensors steht.

Mit der in Figur 5 dargestellten Anordnung eines Komerachips mit vier Zeilen von lichtempfindlichen Elementen 10, die an den vier Rändern des quadratischen Chips angeordnet sind, läßt sich eine stereoskopische Erfassung und Auswertung von Licht punkten vornehmen, so daß die Bewegung des Lichtpunktes im Raum detektierbar ist. Auch hier befindet sich die Auswertungslogik zentral auf dem Chip und wird von den Zeilen der lichtempfindlichen Elemente 10 umrahmt.

Figur 6 verdeutlicht schematisch, daß für jeden Punkt einer Zeile - wie bei einer Farbkamera - beispielsweise drei licht- und farbempfindliche Elemente 10' vorgesehen sein können, die mit jeweils einem eigenen Vergleicher 12 usw. beschaltet sind, wobei die Auswertungslogik 17 drei Maximalwerte für die drei verschiedenen Farben ermittelt und zur Abspeicherung zur Verfügung stellt. Auf diese Weise können 3 verschiedenfarbige Punkte simultan aufgenommen und in ihrer Lage ermittelt werden. Selbstverständlich läßt sich die in Figur 6 dargestellte Zeilenanordnung auf einem Chip mit zwei Zeilen gemäß Figur 3 oder vier Zeilen gemäß Figur 5 in analoger Weise realisieren.

Die in Figur 7 dargestellte Ausführungsform ist insbesondere für eine Vielzahl von verschiedenfarbigen Punkten geeignet. Für jeden Punkt einer zeile sind eine Mehrzahl von lichtempfindlichen Elementen 10 vorgesehen, die mit Farbfiltern für unterschiedliche Farben F1, F2... abgedeckt sind. Die festgestellten und im zugehörigen Speicher 11 vorhandenen Meßwerte werden durch ein Schieberegister hindurchgeschoben, da die Speicher 11 Teil eines Schieberegisters sind. Somit gelangen die Meßwerte für die unterschiedlichen Farben F1, F2... seriell auf die Vergleicher 12, wo sofort die Lage des jeweiligen Maximums festgestellt und über die Ausgangsleitung als binäres Signal ausgegeben wird. Durch Zuordnung des Taktsignals zu dem jeweiligen binären Koordinatenwert kann die Abspeicherung des festgestellten Maximalwerts in Abhängigkeit von der jeweiligen Farbe F1, F2... erfolgen.

Der erfindungsgemäße Kamerachip läßt sich somit in vielen Variationen herstellen und erlaubt aufgrund der erzielbaren Meß- und Auswertungsgeschwindigkeit Untersuchungen, die bisher nicht möglich waren. Anwendungsmöglichkeiten bestehen in der Feststellung hochfrequenter Maschinenschwingungen, in der 3D-Vermessung von Objekten nach dem Triangulationsverfahren mit Auflösungen im Mikrometerbereich, wobei bei einem Abstand der Meßpunkte von 10 m 10 cmpro Sekunde vermessen werden können. Der erfindungsgemäße Kamerachip läßt sich für die Vermessung biologischer Bodenstrukturen und von Gebäuden, für die automatische Werkstückkontrolle im Fertigungsprozeß und für Materialuntersuchungen, Zahnvermessungen im kieferorthopädischen Bereich oder zur Aufnahme von Insekten verwenden.

Darüberhinaus sind ohne Schwierigkeiten Längenmessungen möglich, die mit anderen Verfahren, z. B. induktiven Wegsensoren oder Dehnmeßstreifen für hohe Frequenzen überhaupt nicht möglich sind. Die Pseudo-Array-Kamera läßt sich für viele Arten der Bewegungsanalyse in den Bereichen Sport, Orthopädie, Arbeitswissenschaften sowie für die Fahrzeugmeßtechnik einsetzen. Durch die hohe Geschwindigkeit können Flügelschwingungen an Flugzeugen im Fluge, Rotorblattbewegungen bei Hubschraubern und Crash-Tests bei Autos erfaßt werden. Die Farberfassung erlaubt bei Überschneidungen der Bahnkurven mehrerer Strahler eine eindeutige Zuordnung der Objektpunkte.

Eine weitere Anwendung besteht in der Abtastung von Objekten mittels eines bewegten Laserstrahls, wodurch die Bewegung ganzer Oberflächen praktisch in Echtzeit verfolgt werden kann. So kann z. B. die Veränderung der Knautschzone eines Personenkraftwagens bei einer Fläche von 2 m mit einem Punktrasterabstand von 1 cm und stereoskopischer Aufnahmetechnik noch mit 500 Bildern pro Sekunde erfaßt werden. Dabei sind Veränderungen im Zehntelmillimeterbereich erkennbar.

Der erfindungsgemäße Kamerachip erlaubt somit völlig neuartige und bisher nicht für möglich gehaltene Anwendungen.

## Patentansprüche

1. Schaltungsanordnung für eine punktförmige Ereignisse in einer Ebene erfassende und auswertende Kamera mit lichtempfindlichen Bauelementen (10), deren Ausgangssignale zeilenweise auf entsprechende parallele Eingänge eines Extremwertdetektors (12, 13, 14) schaltbar sind, wobei der Extremwertdetektor jeweils an einem der Eingänge angeschlossene Vergleicher aufweist, von denen jeder das zugehörige Eingangssignal mit einem Referenzsignal vergleicht, das aus den zusammengeschalteten Ausgangssignalen aller lichtempfindlichen Bauelemente (10) der betroffenen Zeile gebildet ist und ein Ausgangssignal abgibt, wenn das zugehörige Eingangssignal größer oder gleich dem Referenzsignal ist, und wobei parallele Eingänge eines Dekoders (16) jeweils mit einem Ausgang des Vergleichers (12) verbunden sind zur Feststellung eines die Position des Extremwerts charakterisierenden Ausgangssignals an einem Eingang des Dekoders (16), **dadurch gekennzeichnet,** daß die lichtempfindlichen Bauelemente (10) in Form einer einzelnen Zeile angeordnet und mit dem zugehörigen Extremwertdetektor (12, 13, 14) und dem zugehörigen Dekoder (16) auf einem gemeinsamen Chip angeordnet sind und daß wenigstens zwei solcher Zeilen von lichtempfindlichen Bauelementen (10) zueinander gedreht angeordnet sind.

2. Schaltungsanordnung nach Anspruch 1 mit einer Anordnung von zwei zueinander gedreht stehenden Zeilen von lichtempfindlichen Bauelementen (10), die über die ihnen zugeordneten Extremwertdetektoren (12,13,14) mit einer zentralen, die Dekoder (16) enthaltenden Auswertungsschaltung (17) verbunden sind.

3. Schaltungsanordnung nach Anspruch 1 mit einer Anordnung von vier Zeilen von lichtempfindlichen Bauelementen (10), von denen jeweils zwei zueinander parallel angeordnet sind und wobei die zueinander parallelen Zeilen zu den anderen parallelen Zeilen gedreht angeordnet sind.

4. Schaltungsanordnung nach Anspruch 2 oder 3, bei dem die gedreht zueinander angeordneten Zeilen orthogonal zueinander stehen.

5. Schaltungsanordnung nach Anspruch 4 und Anspruch 2 oder 3, bei dem die Zeilen der lichtempfindlichen Bauelemente (10) an Rändern eines rechteckigen Chips angeordnet sind, die Extremwertdetektoren (12, 13, 14) unmittelbar nach innen anschließen und eine Auswertungsschaltung (17) mit den Detektoren (16) für alle Zeilen mittig auf dem Chip angeordnet ist.

6. Schaltungsanordnung nach einem der Ansprüche 1 - 5, bei dem der Referenzwert als analoger Extremwert abgreifbar und einer Auswertungsschaltung zufügbar ist.

7. Schaltungsanordnung nach einem der Ansprüche 1 - 6 zur Auswertung von farblich unterschiedlichen Punkten, mit lichtempfindlichen Bauelementen (10') für mehrere Farben, die mit jeweils einem Vergleicher (12) verbunden sind, wobei die jeweils zu einer Farbe gehörenden Ausgangssignale der lichtempfindlichen Bauelemente zur Bildung eines zur jeweiligen Farbe gehörenden Referenzsignals zusammengefaßt sind.

8. Schaltungsanordnung für eine eine Mehrzahl von farblich unterschiedlichen punktförmigen Ereignissen in einer Ebene erfassende und auswertende Kamera mit lichtempfindlichen Bauelementen (10), deren Ausgangssignale zeilenweise auf entsprechende parallele Eingänge eines Extremwertdetektors (12, 13, 14) schaltbar sind, wobei der Extremwertdetektor jeweils an einem der Eingänge angeschlossene Vergleicher aufweist, von denen jeder das zugehörige Eingangssignal mit einem Referenzsignal vergleicht, das aus den zusammengeschalteten Ausgangssignalen aller lichtempfindlichen Bauelemente (10) der betroffenen Zeile gebildet ist und ein Ausgangssignal abgibt, wenn das zugehörige Eingangssignal größer oder gleich dem Referenzsignal ist, und wobei parallele Eingänge eines Dekoders (16) jeweils mit einem Ausgang des Vergleichers (12) verbunden sind zur Feststellung eines die Position des Extremwerts charakterisierenden Ausgangssignals an einem Eingang des Dekoders (16), dadurch gekennzeichnet, daß für jeweils ein punktförmiges Ereignis durch ein vorgeschaltetes Farbfilter empfindliche Bauelemente (10) in Form einer einzelnen Zeile angeordnet und die Ausgangssignale der aus den mehreren Zeilen gebildeten Zeilenanordnung über Schieberregister sequentiell auf einen diesen Zeilen gemeinsamen Extremwertdetektor leitbar sind, daß die Zeilenanordnung mit dem zugehörigen Extremwertdetektor (12, 13, 14) und dem zugehörigen Dekoder (16) auf einem gemeinsamen Chip angeordnet sind und daß wenigstens zwei solcher Zeilenanordnungen von lichtempfindlichen Bauelementen zueinander gedreht angeordnet sind.

9. Mit einer Schaltungsanordnung gemäß einem der Ansprüche 1 - 8 aufgebaute Kamera mit einer Zylinderlinse (19) für eine Zeilenanordnung von lichtempfindlichen Bauelementen (10), wobei die Achse der Zylinderlinse senkrecht zu der Erstreckung der Zeilenanordnung steht.

## Claims

1. Circuit arrangement for a camera which detects and evaluates point-type events in a plane, said camera having light-sensitive components (10), the output signals of which are capable of being switched line-by-line to corresponding parallel inputs of an extreme-value detector (12, 13, 14), wherein the extreme-value detector comprises comparators, each of which is connected to one of the inputs and each of which compares the associated input signal with a reference signal that is formed from the combined output signals of all the light-sensitive components (10) of the line concerned and emits an output signal if the associated input signal is larger than or equal to the reference signal, andwherein parallel inputs of a decoder (16) are each connected to an output of the comparator (12) with a view to determining an output signal characterising the position of the extreme value at one input of the decoder (16), **characterised in that** the light-sensitive components (10) are arranged in the form of an individual line and together with the associated extreme-value detector (12, 13, 14) and the associated decoder (16) are arranged on a common chip and in that at least two such lines of light-sensitive components (10) are arranged rotated in relation to one another.

2. Circuit arrangement according to Claim 1 with an arrangement of two lines, rotated in relation to one another, of light-sensitive components (10) which via the extreme-value detectors (12, 13, 14) assigned to them are connected to a central evaluation circuit (17) containing the decoders (16).

3. Circuit arrangement according to Claim 1 with an arrangement of four lines of light-sensitive components (10), with each two of said lines being arranged parallel to one another and whereby the lines that are parallel to one another are arranged rotated in relation to the other parallel lines.

4. Circuit arrangement according to Claim 2 or 3, in which the lines that are arranged rotated in relation to one another are orthogonal to one another.

5. Circuit arrangement according to Claim 4 and Claim 2 or 3, in which the lines of the light-sensitive components (10) are arranged at edges of a rectangular chip, the extreme-value detectors (12, 13, 14) are directly adjacent towards the inside and an evaluation circuit (17) with the detectors (16) for all lines is arranged centrally on the chip.

6. Circuit arrangement according to one of Claims 1 - 5, in which the reference value is capable of being tapped as an analogue extreme value and capable of being added to an evaluation circuit.

7. Circuit arrangement according to one of Claims 1 - 6 for evaluation of points of differing colour, with light-sensitive components (10') for several colours which are each connected to a comparator (12), wherein the output signals of the light-sensitive components each pertaining to one colour are combined with a view to forming a reference signal pertaining to the particular colour.

8. Circuit arrangement for a camera which detects and evaluates a plurality of point-type events of differing colour in a plane, said camera having light-sensitive components (10), the output signals of which are capable of being switched line-by-line to corresponding parallel inputs of an extreme-value detector (12, 13, 14), wherein the extreme-value detector comprises comparators, each of which is connected to one of the inputs and each of which compares the associated input signal with a reference signal that is formed from the combined output signals of all the light-sensitive components (10) of the line concerned and emits an output signal if the associated input signal is larger than or equal to the reference signal, and wherein parallel inputs of a decoder (16) are each connected to an output of the comparator (12) with a view to determining an output signal characterising the position of the extreme value at one input of the decoder (16), characterised in that with respect to each point-type event through a colour filter connected upstream in series sensitive components (10) are arranged in the form of an individual line and the output signals of the line arrangement formed from the several lines are capable of being conducted sequentially via shift registers to an extreme-value detector that is common to said lines, in that the line arrangement is arranged on a common chip together with the associated extreme-value detector (12, 13, 14) and the associated decoder (16) and in that at least two such line arrangements of light-sensitive components are arranged rotated in relation to one another.

9. Camera constructed with a circuit arrangement according to one of Claims 1 - 8 with a cylindrical lens (19) for a line arrangement of light-sensitive components (10), wherein the axis of the cylindrical lens is perpendicular to the extent of the line arrangement.

## Revendications

1. Agencement de circuit pour une caméra captant dans un plan et traitant un événement ponctuel, comprenant des composants photosensibles (10), dont les signaux de sortie peuvent être envoyés par lignes sur des entrées parallèles correspondantes d'un détecteur de valeur extrême (12, 13, 14), le détecteur de valeur extrême présentant des comparateurs raccordés chacun à l'une des entrées, chacun des comparateurs comparant le signal d'entrée associé avec un signal de référence constitué à partir des signaux de sortie interconnectés de tous les composants photosensibles (10) de la ligne concernée, et donnant un signal de sortie lorsque le signal d'entrée correspondant est supérieur ou égal au signal de référence, tandis que des entrées parallèles d'un décodeur (16) sont reliées chacune avec une sortie de comparateur (12) pour établir un signal de sortie caractérisant la position de la valeur extrême à l'une des entrées du décodeur (16), caractérisé en ce que les composants photosensibles (10) sont disposés sous la forme d'une ligne individuelle et agencés sur une puce commune avec le détecteur de valeur extrême (12, 13, 14) associé et le décodeur (16) associé, et en ce qu'au moins deux telles lignes de composants photosensibles (10) sont disposées avec un angle l'une par rapport à l'autre.

2. Agencement de circuit selon la revendication 1, comportant un agencement de deux lignes de composants photosensibles (10) s'étendant selon un angle l'une par rapport à l'autre, qui sont reliés par leurs détecteurs de valeur extrême associés (12, 13, 14) avec un circuit de traitement central (17) contenant les décodeurs (16).

3. Agencement de circuit selon la revendication 1, comportant un agencement de quatre lignes de composants photosensibles (10) disposées parallèles deux à deux, les lignes parallèles entre elles étant disposées selon un angle par rapport aux autres lignes parallèles.

4. Agencement de circuit selon la revendication 2 ou 3, dans lequel les lignes disposées selon un angle entre elles sont orthogonales entre elles.

5. Agencement de circuit selon la revendication 4 et la revendication 2 ou 3, dans lequel les lignes de composants photosensibles (10) sont disposées en des bords d'une puce rectangulaire, les détecteurs de valeur extrême (12, 13, 14) se raccordent directement vers l'intérieur et un circuit de traitement (17) avec les décodeurs (16) est disposé pour toutes les lignes en position centrale sur la puce.

6. Agencement de circuit selon l'une des revendications 1 à 5, dans lequel la valeur de référence peut être prélevée comme valeur extrême analogique et envoyée à un circuit de traitement.

7. Agencement de circuit selon l'une des revendications 1 à 6, pour le traitement de points de couleurs différentes, comportant des composants photosensibles (10') pour plusieurs couleurs, qui sont reliés chacun avec un comparateur (12), les signaux de sortie, correspondant à chaque couleur, des composants photosensibles étant assemblés pour former un signal de référence associé à la couleur en question.

8. Agencement de circuit pour une caméra captant dans un plan et traitant plusieurs événements ponctuels de couleurs différentes, comprenant des composants photosensibles (10), dont les signaux de sortie peuvent être envoyés par lignes sur des entrées parallèles correspondantes d'un détecteur de valeur extrême (12, 13, 14), le détecteur de valeur extrême présentant des comparateurs raccordés chacun à l'une des entrées, chacun des comparateurs comparant le signal d'entrée associé avec un signal de référence constitué à partir des signaux de sortie interconnectés de tous les composants photosensibles (10) de la ligne concernée, et donnant un signal de sortie lorsque le signal d'entrée correspondant est supérieur ou égal au signal de référence, tandis que des entrées parallèles d'un décodeur (16) sont reliées chacune avec une sortie de comparateur (12) pour établir un signal de sortie caractérisant la position de la valeur extrême à l'une des entrées du décodeur (16), caractérisé en ce que pour chaque événement ponctuel, des composants (10) sensibles à travers un filtre coloré placé devant sont disposés sous la forme d'une ligne individuelle et les signaux de sortie de l'agencement de lignes constitué de plusieurs lignes peuvent être envoyés en séquence par l'intermédiaire de registres à décalage, à un détecteur de valeur extrême commun à ces lignes, en ce que l'agencement linéaire est disposé sur une puce commune avec le détecteur de valeur extrême (12, 13, 14) associé et le décodeur (16) associé, et en ce qu'au moins deux tels agencements linéaires de composants photosensibles (10) sont disposés avec un angle l'un par rapport à l'autre.

9. Caméra réalisée avec un agencement de circuit selon l'une des revendications 1 à 8, comportant une lentille cylindrique (19) pour un agencement linéaire de composants photosensibles (10), l'axe de la lentille cylindrique étant normal à la direction selon laquelle s'étend l'agencement linéaire.
